**Europäisches Patentamt**

**European Patent Office**

**Office européen des brevets**

(19)

(11) Numéro de publication :

**0 026 698**

**B1**

(12)

# FASCICULE DE BREVET EUROPÉEN

(45) Date de publication du fascicule du brevet :
20.04.83

(51) Int. Cl.³ : **G 01 L 19/00, G 01 L 11/00,**
**G 01 L 9/00**

(21) Numéro de dépôt : 80401332.4

(22) Date de dépôt : 19.09.80

(54) **Capteur de pression.**

(30) Priorité : 28.09.79 FR 7924226

(43) Date de publication de la demande :
08.04.81 Bulletin 81/14

(45) Mention de la délivrance du brevet :
20.04.83 Bulletin 83/16

(84) Etats contractants désignés :
DE GB IT NL

(56) Documents cités :
EP A 0 015 836
FR A 2 230 987
US A 3 817 107
US A 4 085 320
US A 4 106 343

(73) Titulaire : **THOMSON-CSF**
**173, Boulevard Haussmann**
**F-75379 Paris Cedex 08 (FR)**

(72) Inventeur : **Coussot, Gérard**
**"THOMSON-CSF" SCPI 173, Bld Haussmann**
**F-75360 Paris Cedex 08 (FR)**
Inventeur : **Texier, Pierre**
**"THOMSON-CSF" SCPI 173, Bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Capteur de pression

La présente invention se rapporte aux capteurs de pression dans lesquels l'élément sensible est constitué par une lamelle mince de matériau piézoélectrique. De tels capteurs sont décrits dans la demande de brevet européen publiée sous le numéro 0 015 836, laquelle demande a une date de priorité antérieure à celle de la présente invention mais n'a été publiée qu'à une date postérieure. La lamelle coiffe un support muni d'un raccord manométrique qui constitue une partie de boîtier. Une autre partie de boîtier sert au montage d'une platine équipée des circuits électroniques. Sous l'effet des pressions exercées sur ses faces, la lamelle se déforme élastiquement. Pour obtenir un signal électrique de mesure dont la fréquence soit proportionnelle à la poussée différentielle exercée sur la lamelle déformable, on dépose sur l'une de ses faces quatre jeux de peignes conducteurs interdigités de façon à former deux lignes à retard à ondes élastiques de surface. En bouclant deux amplificateurs au moyen de ces lignes à retard, on obtient deux oscillateurs dont les fréquences d'oscillation sont sensibles aux déformations subies par la lamelle. Les signaux délivrés par les oscillateurs sont appliqués à un circuit mélangeur qui fournit un signal de mesure dont la fréquence est égale à la différence des signaux incidents. Cette technique de mesure met en œuvre des fréquences d'oscillation de plusieurs dizaines de Mégahertz, mais la fréquence qui traduit la poussée différentielle est considérablement plus faible. Il en résulte que la réalisation d'un tel capteur est très délicate puisqu'il faut faire fonctionner deux oscillateurs ayant des fréquences extrêmement proches l'une de l'autre sans qu'ils réagissent l'un sur l'autre. Cette réalisation est d'autant plus délicate que l'on doit veiller à une bonne reproductibilité en fabrication et à un coût de production qui ne soit pas excessif. Pour abaisser le coût de production, on est amené à réduire les dimensions des éléments constitutifs du capteur.

Cette miniaturisation impose notamment un choix judicieux des modes d'assemblage mécaniques et électriques, car ceux-ci influent directement sur le bon fonctionnement des produits et sur leur fabrication rationnelle.

L'invention a pour objet un capteur de pression à ondes élastiques de surface comportant un senseur ayant deux lignes à retard formées au moyen d'électrodes en peignes interdigités disposées sur une face principale d'une lamelle piézoélectrique, cette lamelle reposant par son autre face principale sur le pourtour d'une chambre installée dans un support et communiquant avec une prise de pression constituée par un conduit, ces lignes à retard étant respectivement reliées à deux circuits amplificateurs, afin que ceux-ci oscillent à deux fréquences, la différence de ces fréquences étant détectée par un circuit mélangeur fournissant le signal de mesure, les circuits amplificateurs et le circuit mélangeur étant regroupés sur une platine caractérisé en ce que la platine est munie de connexions encadrant un orifice livrant passage à la prise de pression ; le conduit de la prise de pression étant fixé à une embase métallique rigide servant de support à la lamelle et munie à sa périphérie de broches venant s'insérer dans ces connexions ; l'embase comportant entre les broches une assise pour la lamelle piézoélectrique ; cette assise comportant une dépression centrale formant ladite chambre et communiquant avec ce conduit.

L'invention sera mieux comprise au moyen de la description ci-après et des figures annexées parmi lesquelles :

la figure 1 représente le schéma de principe d'un capteur de pression à ondes élastiques de surface ;

la figure 2 est une figure explicative ;

la figure 3 illustre l'architecture d'un capteur de pression conforme à l'invention ;

la figure 4 illustre la structure d'un senseur de pression utilisable dans le capteur de pression de la figure 3.

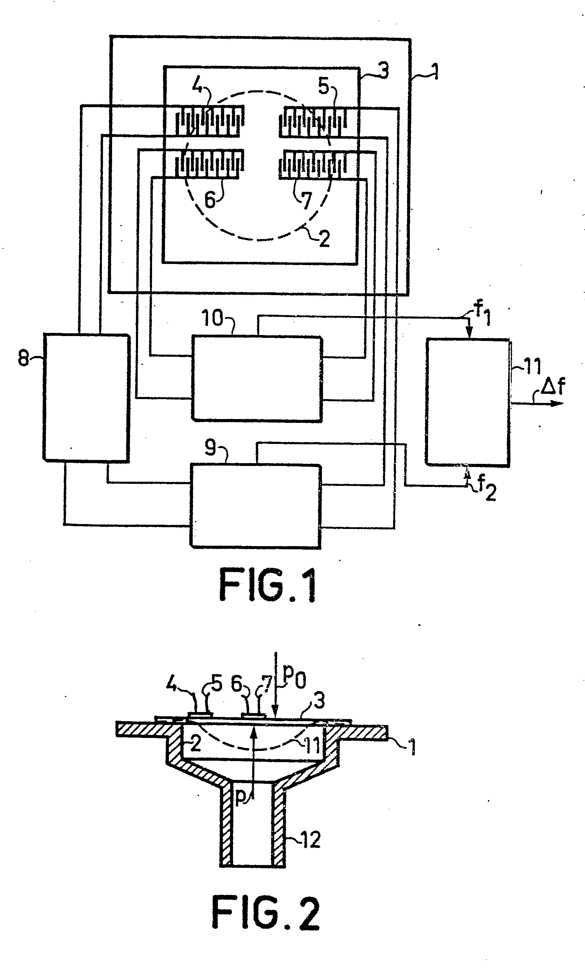

Sur la figure 1, on peut voir le schéma de principe d'un capteur de pression à ondes élastiques de surface. L'élément sensible à la pression est une lamelle piézoélectrique 3, par exemple en quartz ou en niobate de lithium qui repose sur un support 1. Le support 1 comporte une dépression dont le pourtour 2 est représenté en pointillé sur la figure 1. La figure 2 montre que la dépression du support 1 communique avec une prise de pression 12. La lamelle 3 peut être fixée sur le support 1 par un joint de colle qui assure l'étanchéité de la cavité comprise entre le support 1 et la lamelle 1. Ce mode de fixation permet d'assurer un bon encastrement des bords de la lamelle 3. Lorsque des pressions $p_o$ et $p$ sont appliquées aux faces principales de la lamelle 3, celle-ci se déforme comme le montre la ligne pointillée de la figure 2. Pour mettre en évidence l'écart des pressions $p_o$ et $p$, on place sur la face supérieure de la lamelle 3 des électrodes en forme de peignes interdigités. Ces électrodes coopèrent avec le matériau piézoélectrique sous-jacent pour former des transducteurs électromécaniques capables d'échanger des ondes élastiques de surface. Les transducteurs 6 et 7 forment une première ligne à retard dont le temps de retard $\tau_1$ varie en fonction de la déformation centrale de la lamelle 3. Les transducteurs 4 et 5 forment une seconde ligne à retard dont le temps de retard $\tau_2$ varie en fonction de la déformation périphérique de la lamelle 3. Un amplificateur 10 coopère avec la première ligne à retard 6-7 de façon à former une première boucle oscillatrice qui oscille à une fréquence $f_1$ qui dépend de la variation de $\tau_1$. Un amplificateur 9 coopère avec la seconde ligne à retard 4-5 et un dispositif 8 introduisant un retard supplémentaire ajustable de façon à former une seconde boucle oscillatrice qui oscille à une fréquence $f_2$ qui dépend de la variation de $\tau_2$. Un mélangeur 11 reçoit les signaux d'oscillation délivrés par les deux boucles oscillatrices 6-7-10 et 4-5-8-9 et délivre un signal de mesure S dont la fréquence $\Delta f$ est égale à la différence des fréquences incidentes $f_1$ et $f_2$.

Comme les déformations périphérique et centrale de la lamelle 3 sont nettement différenciées, on conçoit aisément que la fréquence $\Delta f$ délivrée par le capteur de pression peut se mettre sous la forme suivante :

$$\Delta f = K(p - p_0) + C$$

où K est un facteur de proportionnalité et C une constante dont la valeur est ajustée au moyen du dispositif 8.

A titre d'exemple non limitatif, avec une plaquette 3 en quartz ayant une épaisseur de 250 microns qui coiffe une dépression 2 de diamètre 1 cm, on obtient des fréquences $f_1$ et $f_2$ de l'ordre de 105 MHz. Le facteur K vaut alors 40 kHz/Bar. Si $p_0$ est la pression atmosphérique, le capteur mesure la dépression existant à la prise de pression 12. Si la pression $p_0$ est nulle, le capteur mesure la pression absolue p existant à la prise de pression 12.

Compte tenu des indications données ci-dessus, on voit que la fabrication en série des capteurs de pression soulève de nombreux problèmes technologiques.

En effet, pour que le facteur K ait une valeur reproductible, il faut assurer un positionnement très précis des électrodes 4, 5, 6 et 7 par rapport au rebord 2 de la dépression pratiquée dans le support 1. Pour éviter que les oscillateurs ne se synchronisent intempestivement du fait de leurs fréquences d'oscillation très voisines, il faut réduire le plus possible les couplages parasites entre boucles oscillatrices. A cela, il faut ajouter que l'économie de matière première nécessaire pour abaisser le coût de fabrication rend ces problèmes encore plus délicats à résoudre.

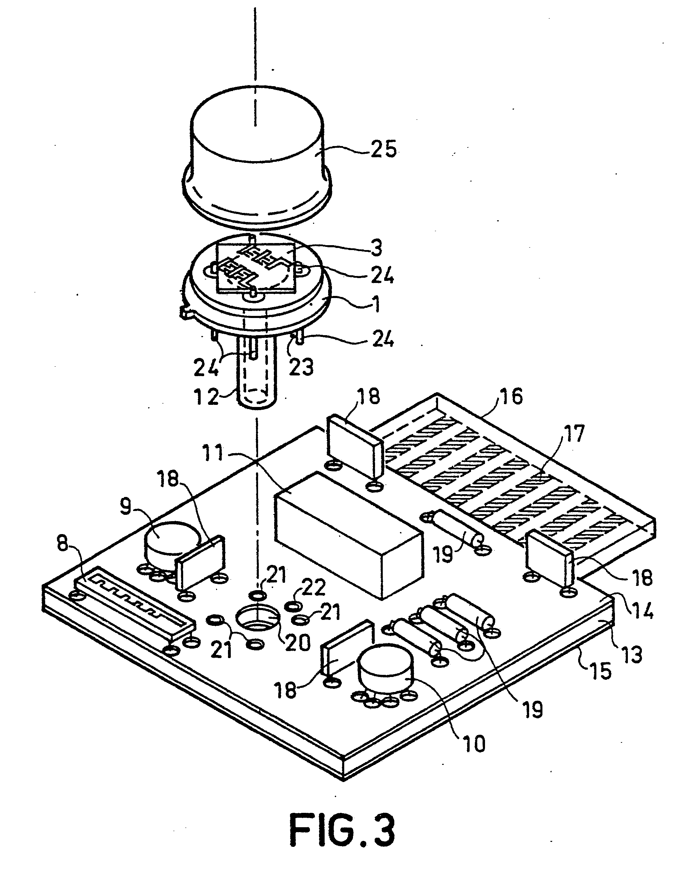

La figure 3 montre une vue éclatée d'un capteur de pression conforme à l'invention.

Le capteur de la figure 3 se compose essentiellement d'une platine sur laquelle sont regroupés les éléments électroniques, c'est-à-dire : les amplificateurs 9 et 10, le mélangeur 11, la ligne à retard ajustable 8, des condensateurs 18 de découplage et de liaison et les résistances 19 qui complètent le circuit électronique. La platine est réalisée à partir d'un stratifié double face qui comprend une plaque isolante 13, une couche de cuivre supérieure 14 formant plan de masse et une couche de cuivre inférieure 15 qui est gravée pour constituer le circuit imprimé. Cette platine comporte une languette de connexion 16 munie de bandes conductrices 17, de sorte qu'elle est enfichable dans un connecteur multipolaire non visible sur la figure 3. Le dispositif 8 comporte une connexion crénelée déposée sur une plaquette isolante. Des entailles au laser peuvent être pratiquées dans cette connexion crénelée pour ajuster la fréquence de repos de chaque capteur.

Comme le montre la figure 3, les éléments électro-mécaniques, c'est-à-dire les lignes à retard à ondes élastiques de surface formées sur la lamelle piézoélectrique 3, sont regroupés dans un senseur de pression qui comporte essentiellement une embase métallique rigide 1 munie à sa périphérie de broches de connexion isolées 24. Les broches 24 traversent l'embase 1 grâce à des traversées étanches. L'embase 1 peut être recouverte d'un capot 25, lequel peut être muni d'un queusot permettant après assemblage d'y faire le vide (mesure d'une pression absolue). Le capot 25 peut aussi comporter un orifice d'équilibrage lorsque le capteur doit mesurer une dépression.

L'insertion du senseur de pression sur la platine du capteur se fait par enfichage des broches 24 dans un ensemble de douilles ou de pastilles de connexion 21 qui sont aménagées sur la platine autour d'un orifice 20. Le rôle de l'orifice 20 est de permettre à la prise de pression 12 solidaire de l'embase 1 de traverser la platine lors de l'implantation du senseur de pression.

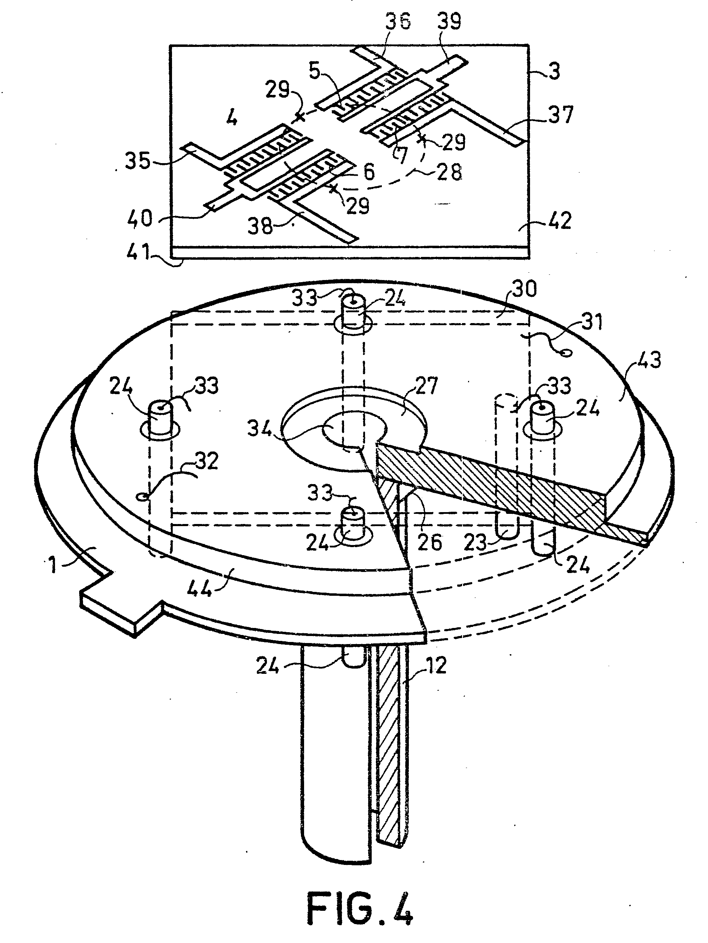

Sur la figure 4, on a représenté à grande échelle l'embase 1 et la plaquette piézoélectrique du senseur de pression conforme à l'invention.

L'embase 1 comporte une surface d'assise pour la lamelle piézoélectrique 3 qui vient se placer entre les portions dépassantes des broches de connexion 24. Ainsi, le positionnement de la lamelle 3 par rapport à l'embase 1 est déjà assuré avec une bonne précision. Une dépression 27 est prévue au milieu de la surface d'assise de l'embase pour délimiter la portion de la lamelle 3 qui doit se déformer et qui est effectivement soumise à la pression p. Le contour de la dépression 27 est reproduit par une circonférence en pointillé 28 sur la face supérieure de la lamelle 3. Des repères cruciformes 29 déposés en même temps que les configurations d'électrodes 4, 5, 6 et 7 permettent de situer avec précision le contour 28 qui n'est pas réellement visible sur la lamelle 3. Lors du collage de la lamelle 3 sur la face supérieure de l'embase, il est possible de contrôler par examen au microscope que les repères 29 se situent bien à l'aplomb du rebord de la dépression 27.

L'embase 1 comporte un épaulement périphérique 44 qui permet l'emboîtage du capot 25. L'ensemble embase-capot ne diffère des dispositifs d'encapsulation connus dans la technique des composants électroniques que par la présence de la dépression 27 et par l'adjonction du conduit 12 brasé à l'aide d'un cordon 26 sur le fond de l'embase 1. L'embase 1 est préalablement percée d'un orifice 34 qui assure la communication entre la dépression 27 et la prise de pression 12. L'embase représentée sur la figure 4 peut être obtenue en partant par exemple d'une embase métallique connue sous la référence JEDEC TO 8, l'expression JEDEC désignant une norme issue du « Joint Electron Devices Engineering Council ». L'embase TO 8 comporte à l'origine quatre broches isolées 24 disposées en carré et une broche supplémentaire 23 destinée à sa mise à la masse et qui fait également office d'organe détrompeur.

Sur la figure 3, on voit que la platine comporte une connexion de mise à la masse 22 reliée au plan de masse 14. Le fond de l'embase 1 forme avec le conduit métallique 12 et le conducteur de masse 14 un blindage très efficace qui contribue à éviter tout accrochage intempestif des boucles oscillatrices. La configuration du dépôt métallique des peignes transducteurs sur la lamelle 3 est visible à grande échelle sur la figure 4. Les peignes des transducteurs 4, 5, 6 et 7 ont des arêtes extérieures qui se prolongent vers le bord de la lamelle 3 par des pattes 35, 36, 37 et 38 qui sont reliées aux broches 24, après collage de la lamelle, par des fils de connexion 33 très courts. Les arêtes intérieures des peignes transducteurs forment avec des pattes 39 et 40 des connexions en Y qui sont mises à la masse par des fils de connexion 32 reliés directement à l'embase 1. Cette disposition favorise une bonne isolation des boucles oscillatrices. L'alignement des peignes transducteurs est oblique par rapport aux bords de la lamelle 3, ce qui est favorable à la dispersion des ondes élastiques de surface qui viennent rencontrer les bords de la lamelle 3. La face inférieure 41 de la lamelle 3 est collée sur l'embase 1 dans toute la zone qui entoure la circonférence 28. La dépression 27 est donc coiffée par une portion de la lamelle 3 libre de se déformer, mais comme les ondes élastiques de surface se propagent sur l'autre face 42 et comme le joint de colle sert aussi de joint d'étanchéité, on voit que l'humidité et les impuretés qui peuvent être présentes dans la prise de pression 12 n'ont aucune incidence néfaste sur l'échange des ondes élastiques de surface. La faible profondeur de la dépression 27 et le renforcement mécanique apporté par la brasure 26 de l'embout 27 assure une bonne rigidité d'ensemble de l'embase qui permet de l'utiliser comme support pour un bon encastrement du pourtour de la lamelle 3.

La réalisation modulaire du capteur de la figure 3 fait que le senseur de pression de la figure 4 est un composant à part entière dont la fabrication et le contrôle de fonctionnement sont totalement indépendants de la fabrication et du contrôle global du capteur de pression. Ceci constitue un élément de souplesse dans le déroulement du processus de fabrication. Comme en outre, le senseur de pression présente une morphologie très proche de celle d'autres composants électroniques, les machines utilisées pour la fabrication des capteurs sont immédiatement disponibles pour d'autres fabrications et vice-versa. Bien entendu, rien n'empêche de prévoir une connexion détachable entre le senseur et la platine du capteur, ou au contraire une fixation à demeure par soudure des broches de connexion.

Pour terminer, il y a lieu de signaler que l'ensemble du capteur de pression de la figure 3 peut être enrobé par trempage ou par moulage, ce qui assure un bon maintien du senseur sur la platine. Les tractions mécaniques exercées sur la prise de pression sont bien tolérées par le capteur après cet enrobage du fait du scellement du conduit 12 dans l'orifice 20 de la platine.

## Revendications

1. Capteur de pression à ondes élastiques de surface comportant un senseur ayant deux lignes à retard (4, 5 ; 6, 7) formées au moyen d'électrodes en peignes interdigités disposées sur une face principale (42) d'une lamelle piézoélectrique (3), cette lamelle reposant par son autre face principale (41) sur le pourtour (2) d'une chambre installée dans un support et communiquant avec une prise de pression (12) constituée par un conduit, ces lignes à retard (4, 5 ; 6, 7) étant respectivement reliées à deux circuits amplificateurs (9, 10), afin que ceux-ci oscillent à deux fréquences ($f_1$, $f_2$), la différence ($\Delta f$) de ces fréquences étant détectée par un circuit mélangeur (11) fournissant le signal de mesure, les circuits amplificateurs (9, 10) et le circuit mélangeur (11) étant regroupés sur une platine (13, 14, 15), caractérisé en ce que la platine est munie de connexions (21, 22) encadrant un orifice (20) livrant passage à la prise de pression (12) ; le conduit de la prise de pression étant fixé à une embase métallique rigide (1) servant de support à la lamelle (3) et munie à sa périphérie de broches (23, 24) venant s'insérer dans ces connexions (21, 22) ; l'embase (1) comportant entre les broches une assise pour la lamelle piézoélectrique ; cette assise comportant une dépression centrale (27) formant ladite chambre et communiquant avec ce conduit.

2. Capteur selon la revendication 1, caractérisé en ce que la platine (13, 14, 15) est réalisée à partir d'un stratifié double face ; la face cuivrée (14) située du côté de l'implantation des composants étant utilisée comme plan de masse ; l'autre face cuivrée (15) étant gravée de manière à réaliser les interconnexions et à former un peigne de connexion (16, 17) permettant l'enfichage de la platine sur un connecteur multipolaire plat.

3. Capteur selon l'une quelconque des revendications 1 et 2, caractérisé en ce que les connexions (21, 22) entourant l'orifice (20) de la platine (13, 14, 15) sont des douilles permettant l'établissement d'une liaison déconnectable avec les broches (23, 24).

4. Capteur selon l'une quelconque des revendications précédentes, caractérisé en ce que la face (42) de la lamelle (3) portant les électrodes en peignes interdigités (4, 5 ; 6, 7) comporte des repères (29) de positionnement qui doivent être placés à l'aplomb du contour (28) de la dépression (27) pratiquée dans l'embase (1).

5. Capteur selon l'une quelconque des revendications précédentes, caractérisé en ce que les électrodes en peignes (4, 5 ; 6, 7) forment deux alignements parallèles orientés obliquement par rapport aux bords de la lamelle piézoélectrique (3).

6. Capteur selon la revendication 5, caractérisé en ce que les arêtes des peignes (4, 5 ; 6, 7) délimitant la séparation entre les deux alignements sont interconnectées et reliées à l'embase (1) ; une broche de connexion (23) de l'embase (1) étant électriquement reliée à celle-ci ; les autres broches (24) isolées de l'embase étant respectivement reliées aux autres arêtes de peignes.

7. Capteur selon l'une quelconque des revendications précédentes, caractérisé en ce que l'embase (1) comporte un épaulement périphérique (44) ; un capot de protection (25) étant emboîté et fixé sur cet épaulement.

8. Capteur selon la revendication 7, caractérisé en ce que le capot (25) est scellé sur l'embase (1).

9. Capteur selon la revendication 8, caractérisé en ce que l'on fait le vide sous le capot (25) ; la lamelle piézoélectrique (3) et les broches de connexion (23, 24) étant fixées de façon étanche sur l'embase (1).

10. Capteur selon la revendication 7, caractérisé en ce que le capot (25) est muni d'un orifice d'équilibrage de pression.

11. Capteur selon l'une quelconque des revendications précédentes, caractérisé en ce que la lamelle piézoélectrique (3) forme un quadrilatère et en ce que les broches de connexion (23, 24) de l'embase (1) sont agencées de façon à être tangentes à ce quadrilatère.

12. Capteur selon l'une quelconque des revendications précédentes, caractérisé en ce que l'embase (1) est issue d'une embase référencée JEDEC TO 8.

### Claims

1. An elastic surface wave pressure gauge incorporating a sensor having two delay lines (4, 5 ; 6, 7) formed by means of interdigitated comb shaped electrodes placed on one main face (42) of a piezoelectric wafer (3), the latter resting by its other main face (41) on the periphery (2) of a chamber made up in a holder and communicating with a pressure inlet (12) constituted by a duct, said delay lines (4, 5 ; 6, 7) being respectively connected to two amplifier circuits (9, 10) in order that the latter oscillate at two frequencies ($f_1$, $f_2$), the difference ($\Delta f$) between these frequencies being detected by a mixer stage (11) which supplies the measuring signal, wherein the amplifier circuits (9, 10) and the mixer stage (11) are grouped on a plate (13, 14, 15), characterized in that the plate is provided with connections (21, 22) surrounding an orifice (20) providing a passage for the pressure inlet (12), the pressure inlet duct being fixed to a rigid metal header (1) which is the holder of the wafer (3) and whose periphery is provided with pins (23, 24) which are inserted in the said connections (21, 22), said header (1) having a support for the piezoelectric wafer between the pins, this support having a central depression (27) which constitutes said chamber and which communicates with the pipe.

2. A gauge according to claim 1, characterized in that the plate (13, 14, 15) is formed from a double faced laminate, the copper coated face (14) on the side for installing the components serving as an earth plane, whilst the other copper-coated face (15) is etched so as to form the interconnections and also a connecting comb (16, 17) permitting the plate to be plugged on to a flat multipole connector.

3. A gauge according to any one of the preceding claims, characterized in that the connections (21, 22) surrounding the plate (13, 14, 15) orifice (20) are bushes permitting a disconnectable connection with the pins (23, 24).

4. A gauge according to any one of the preceding claims, characterized in that the face (42) of the wafer (3) carrying the interdigitated comb electrodes (4, 5 ; 6, 7) has positioning marks (29) which must be positioned directly above the contour (28) of the depression (27) made in the header (1).

5. A gauge according to any one of the preceding claims, characterized in that the comb electrodes (4, 5 ; 6, 7) form two parallel alignments oriented in an oblique manner relative to the edges of the piezoelectric wafer (3).

6. A gauge according to claim 5, characterized in that the edges of the combs (4, 5 ; 6, 7) defining the separation between the two alignments are interconnected and are connected to the header (1), a connecting pin (23)of the header (1) being electrically connected to the latter, the other pins (24) which are insulated from the header being respectively connected to the other edges of the combs.

7. A gauge according to any one of the preceding claims, characterized in that the header (1) has a peripheral shoulder (44), a protective cap (25) being mounted on and fixed to that shoulder.

8. A gauge according to claim 7, characterized in that the cap (25) is sealed to the header (1).

9. A gauge according to claim 8, characterized in that a vacuum is formed under the cap (25), the piezoelectric wafer (3) and the connecting pins (23, 24) being fixed to the header (1) in a sealed manner.

10. A gauge according to claim 7, characterized in that the cap (25) is provided with a pressure balancing orifice.

11. A gauge according to any one of the preceding claims, characterized in that the piezoelectric wafer (3) forms a quadrilateral and that the connecting pins (23, 24) of the header (1) are arranged so as to be tangential thereto.

12. A gauge according to any one of the preceding claims, characterized in that the header (1) is a JEDEC TO 8 header.

### Ansprüche

1. Drucksonde für elastische Oberflächenwellen, deren Sensor zwei Verzögerungsleitungen (4, 5 ; 6, 7) in Form von Elektroden aus verzahnten Kämmen aufweist, die auf einer Hauptseite (42) eines piezoelektrischen Plättchens (3) angeordnet sind, wobei dieses Plättchen mit seiner anderen Hauptseite (41) auf dem Rand (2) einer in einem Träger untergebrachten und mit einem aus einem Röhrchen bestehenden Drucknehmer (12) in Verbindung stehenden Kammer aufliegt, wobei die Verzögerungsleitungen (4, 5 ; 6, 7) je mit einem Verstärkungsschaltkreis (9, 10) verbunden sind, so daß diese mit zwei Frequenzen ($f_1$, $f_2$) schwingen, wobei die Differenz ($\Delta f$) dieser beiden Frequenzen von einem Mischkreis (11) entdeckt wird, der das Meßsignal liefert, und wobei die Verstärkerschaltkreise (9, 10) und der Mischkreis (11) auf einer Druckschaltungsplatte (13, 14, 15) zusammengefaßt sind, dadurch gekennzeichnet, daß die Druckschaltungsplatte Anschlüsse (21, 22) aufweist, die um eine zum Drucknehmer (12) führende Öffnung (20) herum angebracht sind, daß das Drucknehmerröhrchen an einer starren metallischen Basis (1) befestigt ist, die als Träger für das Plättchen (3) dient und in ihrem Randbereich Kontaktstifte (23, 24), die in die Anschlüsse (21, 22) eingreifen, aufweist, daß die Basis (1) zwischen den Kontakstiften ein Auflager für das piezoelektrische Plättchen aufweist und daß dieses Auflager eine zentrale Vertiefung (27) aufweist, die die Kammer bildet und mit dem Röhrchen in Verbindung steht.

2. Sonde nach Anspruch 1, dadurch gekennzeichnet, daß die Druckschaltungsplatte (13, 14, 15) aus einer beidseitig beschichteten Schichtstoffplatte gebildet wird, deren eine verkupferte Seite (14), die auf der Seite der Bauteile liegt, als Masseebene verwendet wird, während die andere verkupferte Seite (15) zur Bildung der Verbindungsleitungen und eines Anschlußkamms (16, 17) graviert ist, über den die Druckschaltungsplatte in einen vielpoligen Anschlußflachstecker eingesteckt werden kann.

3. Sonde nach einem der Ansprüche 1 bis 2, dadurch gekennzeichnet, daß die die Öffnung (20) der Druckschaltungsplatte (13, 14, 15) umgebenden Anschlüsse (21, 22) als Buchsen ausgebildet sind, die mit den Kontaktstiften (23, 24) eine trennbare Verbindung herzustellen erlauben.

4. Sonde nach einem beliebigen der vorhergehenden Ansprüche, dadurch gekennzeichnet, daß die die Elektroden aus verzahnten Kämmen (4, 5 ; 6, 7) tragende Seite (42) des Plättchens (3) Bezugspunkte (29) für die Positionierung aufweisen, die senkrecht über dem Rand (28) der Vertiefung (27) in der Basis (1) plaziert werden müssen.

5. Sonde nach einem beliebigen der vorhergehenden Ansprüche, dadurch gekennzeichnet, daß die kammförmigen Elektroden (4, 5 ; 6, 7) zwei parallele Fluchten bilden, die schräg bezüglich der Ränder des piezoelektrischen Plättchens (3) ausgerichtet sind.

6. Sonde nach Anspruch 5, dadurch gekennzeichnet, daß diejenigen Kanten der Kämme (4, 5 ; 6, 7), die die Trennung zwischen den beiden Fluchten begrenzen, miteinander und mit der Basis (1) verbunden sind, daß eine Anschlußbuchse (23) der Basis (1) an letztere elektrisch angeschlossen ist und daß die anderen Buchsen (24), die bezüglich der Basis isoliert sind, je an eine der anderen Kanten der Kämme angeschlossen sind.

7. Sonde nach einem beliebigen der vorhergehenden Ansprüche, dadurch gekennzeichnet, daß die Basis (1) am Rand eine Schulter (44) aufweist und daß ein Schutzdeckel (25) auf diese Schulter aufgesteckt und an ihr befestigt ist.

8. Sonde nach Anspruch 7, dadurch gekennzeichnet, daß der Deckel (25) auf der Basis (1) versiegelt ist.

9. Sonde nach Anspruch 8, dadurch gekennzeichnet, daß unter dem Deckel (25) ein Vakuum hergestellt wird, daß das piezoelektrische Plättchen (3) und die Anschlußbuchsen (23, 24) dicht auf der Basis (1) befestigt sind.

10. Sonde nach Anspruch 7, dadurch gekennzeichnet, daß der Deckel (25) eine Druckausgleichsöffnung aufweist.

11. Sonde nach einem beliebigen der vorhergehenden Ansprüche, dadurch gekennzeichnet, daß das piezoelektrische Plättchen (3) vier Seiten besitzt und daß die Anschlußbuchsen (23, 24) der Basis (1) so angeordnet sind, daß sie diese vier Seiten berühren.

12. Sonde nach einem beliebigen der vorhergehenden Ansprüche, dadurch gekennzeichnet, daß die Basis (1) von einer Basis vom Typ JEDEC TO 8 stammt.

FIG.1

FIG.2

FIG.3

FIG.4